Europäisches Patentamt

European Patent Office

Office européen des brevets

(11) Veröffentlichungsnummer : **0 187 981**
**B1**

(12) **EUROPÄISCHE PATENTSCHRIFT**

(45) Veröffentlichungstag der Patentschrift :
23.11.89

(21) Anmeldenummer : 85116229.7

(22) Anmeldetag : 19.12.85

(51) Int. Cl.⁴ : **B 65 G 47/88, B 65 G 47/51**

(54) Verfahren und Vorrichtung zum Zuführen von Packungen zu einer Sammel und Verpackungsstation.

(30) Priorität : 17.01.85 DE 3501404

(43) Veröffentlichungstag der Anmeldung :
23.07.86 Patentblatt 86/30

(45) Bekanntmachung des Hinweises auf die Patenterteilung : 23.11.89 Patentblatt 89/47

(84) Benannte Vertragsstaaten :
DE FR GB IT

(56) Entgegenhaltungen :
BE—A— 842 509
DE—A— 2 800 570
DE—B— 1 708 885
FR—A— 2 232 498
GB—A— 954 249
US—A— 3 934 707
IBM TECHNICAL DISCLOSURE BULLETIN, Band 26,
Nr. 8, Januar 1984, Seiten 4393-4395, New York, US;
M.H. BITTLER et al.: "Vertical buffer in an automated
assembly line"

(73) Patentinhaber : Focke & Co. (GmbH & Co.)
Siemensstrasse 10
D-2810 Verden (DE)

(72) Erfinder : Focke, Heinz
Moorstrasse 64
D-2810 Verden (DE)

(74) Vertreter : Bolte, Erich, Dipl.-Ing.
Hollerallee 73
D-2800 Bremen 1 (DE)

## Beschreibung

Die Erfindung betrifft ein Verfahren sowie eine Vorrichtung zum Zuführen von Gegenständen, insbesondere Packungen zu einer Verarbeitungsstation, gemäß dem Oberbegriff des Patentanspruches 1 bzw. Patentanspruches 5.

Ein derartiges Verfahren sowie eine Vorrichtung zur Durchführung desselben sind aus der DE-A 28 00 570 bekannt. Konkret betrifft die DE-A 28 00 570 eine Speicheranordnung mit mehreren Aufnahmen für eine Reihe von Gegenständen, die mittels eines durchgehenden Förderers bis zu einem ersten Sperrmittel gefördert, dort in eine Reihe gestaut und anschließend in Speicher abgelegt werden, währenddessen die nachfolgenden Packungen durch ein zweites Sperrmittel aufgehalten werden. Die Ablegung der Gegenstände im Speicher sowie deren Rückförderung auf den durchgehenden Förderer erfolgt mittels zu beiden Seiten des durchgehenden Förderers auf- und abbewegbaren Tragleisten. Der bekannte Vertikalspeicher ist bei einem längerfristigen Stau durchaus geeignet, bei einem kurzfristigen Stau in der Handhabung jedoch viel zu aufwendig.

Da in der Praxis, insbesondere in der zigarettenverarbeitenden Industrie, vornehmlich nur kurzfristige Staus entstehen, ohne daß längerfristige Staus ausgeschlossen werden können, hat sich die bekannte Speicheranordnung nicht bewährt.

Der vorliegenden Erfindung liegt daher die Aufgabe zugrunde, ein Verfahren und eine Vorrichtung zum Zuführen von Gegenständen, insbesondere Packungen zu einer Verarbeitungsstation, z. B. einer Sammel- und Verpackungsstation, zu schaffen, die gleichermaßen gut bei langfristigen und kurzfristigen Staus geeignet ist, ohne daß durch diese Doppelfunktion ein erheblicher konstruktiver Mehraufwand entsteht.

Diese Aufgabe wird verfahrensgemäß durch die kennzeichnenden Merkmale des Patentanspruches 1, vorrichtungstechnisch durch die kennzeichnenden Merkmale des Patentanspruches 5 gelöst.

Im Unterschied zu dem erwähnten Stand der Technik zeichnet sich die Erfindung durch einen zusätzlichen Packungsheber auf, mit dessen Hilfe das Abspeichern von Packungsreihen im Falle eines nur sehr kurzzeitigen Staus mit dem problematischen nachfolgenden Entleeren des Speichers umgangen wird. Nach der vorliegenden Erfindung erfolgt ein Abspeichern nur jeweils dann, wenn im Bereich des Packungsspeichers neue Packungsgruppen gebildet worden sind. Die Erfindung hat demnach den Vorteil, daß bei nur kurzzeitigem Stau der Packungsheber die Staureihe lediglich absenkt und, da im Packungsspeicher bisher keine Packungsgruppen abgespeichert worden sind, auch kein Rückführen der Packungsgruppen in den Förderstrom erfolgen muß. Auf diese Weise ist es auch nicht erforderlich, wie beim Stand der Technik nach der DE-A-28 00 570 mindestens drei hintereinander angeordnete Vertikalspeicher vorzusehen, die sukzessive jeweils eine vorbestimmte Anzahl von Gegenständen von dem durchgehenden Förderer aufnehmen bzw. wieder abgeben. Dementsprechend aufwendig ist auch das bekannte System.

Aus der FR-A-22 32 498 ist zwar eine Vorrichtung zur Förderung und Verpackung von Industrieprodukten, hauptsächlich Gasflaschen, bekannt, bei der die Gegenstände kontinuierlich in einem Strom angefördert werden und bei der bestimmte Gruppen von Gegenständen, nämlich Flaschen, zeitweilig abgehoben werden können, bis die davor liegende Reihe entsprechend aufgebraucht ist. Allerdings kann nach der in der FR-A-22 32 498 beschriebenen bzw. dargestellten Vorrichtung nur verhindert werden, daß sich in einem vorbestimmten Bereich ein Stau von Flaschen aufbaut ; nicht hingegen kann vermieden werden, daß sich jenseits des vorbestimmten Bereichs Flaschen aufstauen. Um dort einen Stau zu verhindern, wäre es nämlich erforderlich, die Fördervorrichtung zu stoppen. Demgegenüber kann bei der Erfindung das Förderband weiterlaufen, da ein Förderstau dadurch verhindert wird, daß gruppenweise die nachfolgend geförderten Packungen in einen Packungsspeicher abgelegt werden.

Weitere Einzelheiten des erfindungsgemäßen Verfahrens sowie der erfindungsgemäßen Vorrichtung sind in den Ansprüchen 2-4 bzw. 6-10 beschrieben, wobei sich letztere vornehmlich auf die konstruktive Ausbildung des Packungshebers beziehen.

Ein Ausführungsbeispiel der Erfindung wird nachfolgend anhand der Zeichnungen näher erläutert. Es zeigen

Fig. 1 die Vorrichtung in vereinfachter Seitenansicht,

Fig. 2 einen Ausschnitt der Vorrichtung gem. Fig. 1, ebenfalls in Seitenansicht, bei vergrößertem Maßstab,

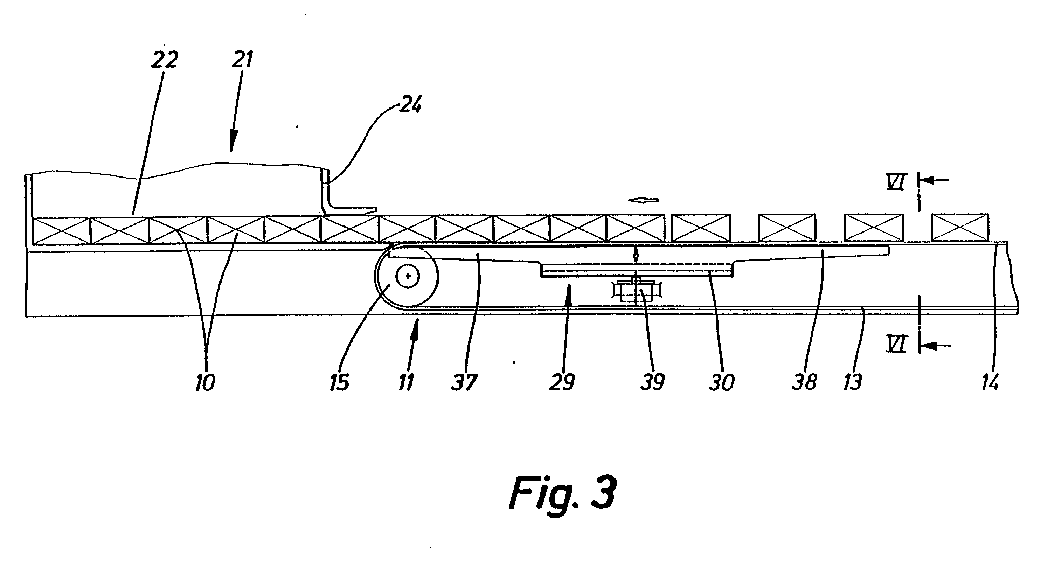

Fig. 3 einen der Sammel- und Verpackungsstation zugekehrten Bereich der Vorrichtung in Seitenansicht, bei nochmals vergrößertem Maßstab,

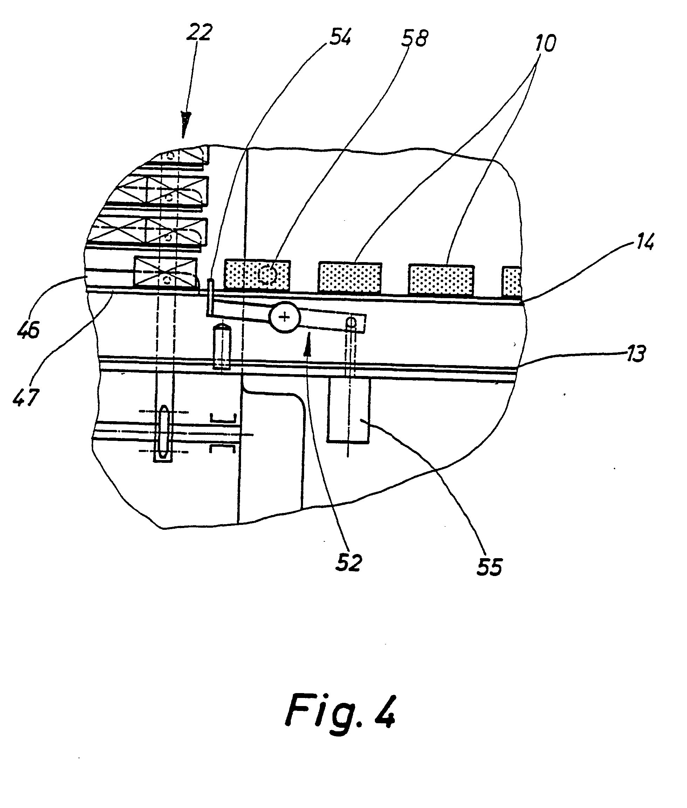

Fig. 4 eine Einzelheit der Vorrichtung im Bereich des Packungsspeichers in Seitenansicht,

Fig. 5 einen Querschnitt durch die Vorrichtung in der Ebene VI-VI der Fig. 3 bei abgehobenen Packungen (Staureihe),

Fig. 6 einen Querschnitt in der Ebene VI-VI bei auf dem Packungsförderer aufliegenden Packungen.

Das in den Zeichnungen dargestellte Ausführungsbeispiel befaßt sich mit der (Weiter-) Verpackung von (Klein-) Packungen 10, insbesondere Zigaretten-Stangen. Bei diesen handelt es sich um längliche, quaderförmige Gebilde, die querliegend, also mit ihrer Längserstreckung quer zur Förderrichtung, auf einem Packungsförderer 11 Aufnahme finden. Die Packungen 10 werden im Bereich einer Beschickungsstation 12 auf den Packungsförderer 11 aufgegeben, und zwar von einer entsprechenden, vorgeordneten Verpackungsmaschine kommend.

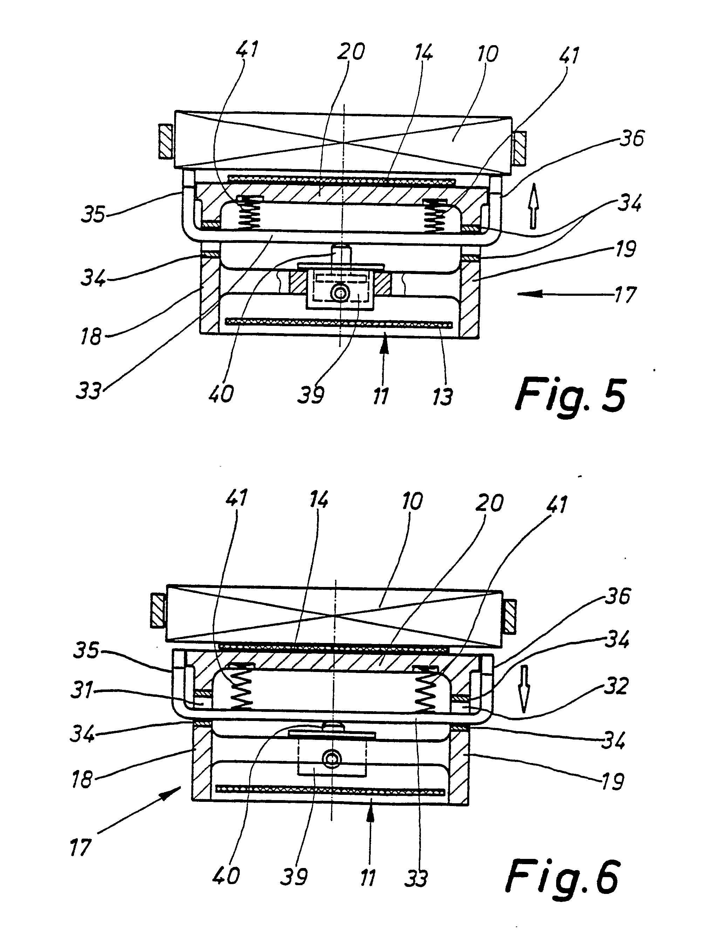

Der Packungsförderer 11 besteht bei dem vorliegenden Ausführungsbeispiel aus einem einzelnen Fördergurt 13. Dieser ist so bemessen, daß die im Bereich eines Fördertrums 14 aufliegenden Packungen 10 an beiden Seiten deutlich über den Fördergurt 13 hinwegragen (Fig. 5 und 6). Der Fördergurt 13 wird über Umlenkrollen 15 und 16 geleitet. Diese sind in bzw. an einem langgestreckten Träger 17 gelagert, der als Hohlkastenprofil ausgebildet ist mit seitlichen Tragwangen 18 und 19 sowie einer Oberwandung 20, auf der der Fördertrum 14 aufliegt.

Die Packungen 10 werden mit Abständen voneinander durch den Packungsförderer 11 einer Sammel- und Verpackungsstation 21 zugeführt. In dieser werden jeweils Packungsgruppen 22 von mehreren, in Dichtlage nebeneinander angeordneten Packungen 10, im vorliegenden Falle fünf Packungen 10 je Packungsgruppe 22, gebildet. Die jeweils von einer Hubplatte 23 aufgenommene Packungsgruppe 22 wird angehoben in eine Sammelkammer 24. Die jeweils untere Packungsgruppe 22 wird dabei durch zurückziehbare Tragleisten 25 gehalten. Sobald der komplette Inhalt einer Großpackung zusammengestellt ist, wird dieser aus der Sammelkammer 24 in Querrichtung durch einen Schieber 26 aus- und in einen bereitgehaltenen Großbehälter (Faltkarton) eingeschoben. Der Packungsförderer 11 endet mit Abstand vor der Sammelkammer 24.

Bei Störungen im Bereich der Sammel- und Verpackungsstation 21 oder in einem nachfolgenden Bereich, wenn jedenfalls die von dem Packungsförderer 11 zugeführten Packungen 10 nicht mehr abgenommen werden, baut sich auf dem Packungsförderer 11 benachbart zur Sammel- und Verpackungsstation 21 ein Packungsstau auf, nämlich eine Staureihe 27. Diese setzt sich aufgrund der Zuführung von Packungen 10 entgegen der Förderrichtung fort, bis eine kritische Länge dieser Staureihe 27 erreicht ist. Im vorliegenden Fall ist diese durch eine quer zur Förderrichtung wirkende, unmittelbar oberhalb des Packungsförderers 11 angeordnete Fotozelle 28 oder ein anderes geeignetes Tastorgan bestimmt. Sobald die Fotozelle 28 durch eine aufgestaute, also nicht weitergeförderte Packung 10 über einen Zeitraum erregt wird, werden die Packungen 10 der Staureihe 27 geringfügig von der Oberfläche des Fördertrums 14 abgehoben. Der Pakungsförderer 11 läuft dabei weiter, ohne die Unterseite der Packungen 10 zu berühren.

Benachbart zur Sammel- und Verpackungsstation 21 ist zu diesem Zweck ein Packungsheber 29 dem Packungsförderer 11 zugeordnet. Der Packungsheber 29 ist so ausgebildet, daß eine Anzahl von aufgestauten Packungen 10, nämlich die Staureihe 27, komplett von unten her erfaßt und um beispielsweise etwa 5 mm angehoben wird.

Bei dem gezeigten Ausführungsbeispiel besteht der Packungsheber 29 aus einem mittleren Tragteil 30, welches als U-förmig gebogenes Blechstück ausgebildet ist (Fig. 5 und 6). Dieser U-förmige Tragteil ist in dem Träger 17 des Packungsförderers 11 bewegbar gelagert. Zu diesem Zweck sind in den Tragwangen 18 und 19 in Längsrichtung verlaufende Schlitze 31 und 32 gebildet. In diesen erstreckt sich ein unterer Steg 33 des Tragteils 30, der somit in dem Träger 17 gelagert ist. Ober- und Unterseite der Schlitze 31, 32 sind mit elastischen Belägen 34 bedeckt.

Außerhalb des Trägers 17 ist der Tragteil 30 mit nach oben gerichteten Schenkeln 35 und 36 ausgebildet. Diese bilden das eigentliche Trag- bzw. Stützorgan für die Packungen 10. Die Schenkel 35, 36 werden bei Aufwärtsbewegung des Pakkungshebers 29 außen an dem Träger 17 und auch an dem Fördergurt 13 vorbeibewegt, derart, daß die auch über den Träger 17 seitlich hinwegragenden Packungen 10 der Staureihe 27 an ihren beiden seitlichen Randbereichen erfaßt und angehoben werden (Fig. 5). Der Tragteil 30 liegt dabei in der unteren Stellung auf dem unteren Belag 34 und in der oberen Stellung an dem oberen Belag 34 in dem Schlitz 31, 32.

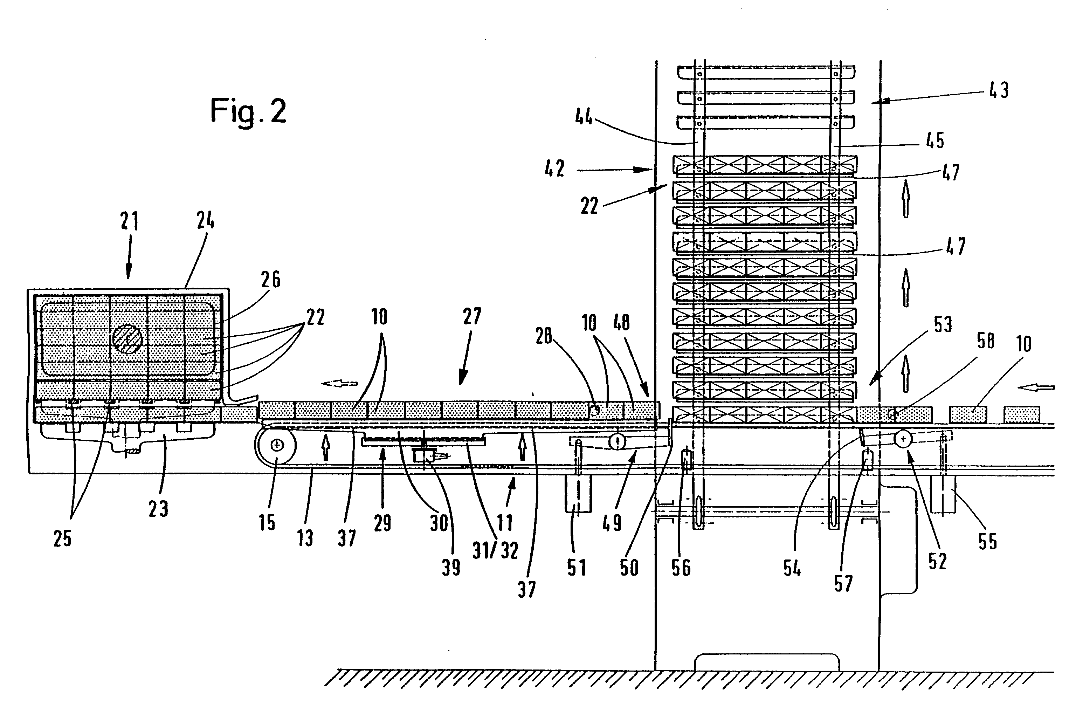

Der Tragteil 30 ist von begrenzter Länge (Fig. 2). Die Schenkel 35, 36 gehen an beiden Seiten über in auskragende, im Querschnitt rechteckige Tragarme 37 und 38. Diese bilden zusammen mit dem Tragteil 30 den Packungsheber 29.

Für die Auf- und Abwärtsbewegung des Packungshebers 29 bzw. des Tragteils 30 dient im vorliegenden Fall ein Druckmittelzylinder 39, der beispielsweise mit Druckluft beaufschlagt wird. Ein aufwärtsgerichteter Stößel 40 des Druckmittelzylinders 39 wirkt im Mittelpunkt des Tragteils 30 bzw. des Stegs 33 auf diesen in hebendem Sinne.

Die Aufwärtsbewegung des Tragteils 30 erfolgt gegen Rückholorgane, nämlich gegen die Belastung von Druckfedern 41. Durch diese wird gewährleistet, daß beim Einfahren des Stößels 40 zum Absenken der Staureihe 27 auf den Packungsförderer 11 der Packungsheber 29 zuverlässig in die untere Ausgangsstellung zurückkehrt.

Während der Bildung der Staureihe 27 und Abhebung derselben vom Packungsförderer 11 werden auf diesem weiterhin Packungen 10 zugeführt, da die Übergabe im Bereich der Beschickungsstation 12 nicht unterbrochen ist. Diese nachfolgenden Packungen 10 werden einem Packungsspeicher 42 zugeführt. Nach Beendigung der Störung und Fortsetzung der Zuführung von Packungen 10 zur Sammel- und Verpackungsstation 21 werden die in dem Packungsspeicher 42 aufgenommenen Packungen 10 in den Packungsfluß, also auf den Packungsförderer 11, zurückgeführt.

Der Packungsspeicher 42 ist als Hochförderer ausgebildet und etwa mittig auf der durch den Packungsförderer 11 gebildeten Transportstrecke angeordnet. Der Packungsspeicher 42 besteht aus zwei einander zu beiden Seiten des Packungsförderers 11 gegenüberliegenden Hubförderern 43, je aus zwei Transportgurten 44 und 45. Letztere sind durch quergerichtete Packungsaufnahmen 46 miteinander verbunden, nämlich winkelförmigen Profilen, von denen ein unterer Tragschenkel 47 zur Auflagerung der Enden der (quergerichteten) Packungen 10 dient. Die Packungsaufnahmen 46 sind so bemessen, daß eine Packungsgruppe 22 aus im vorliegenden Falle fünf Packungen 10 auf zwei einander in gleicher horizontaler Ebene gegenüberliegenden Packungsaufnahmen 46 gehalten bzw. getragen wird. Durch übereinstimmenden Antrieb der Hubförderer 43 zu beiden Seiten des Packungsförderers 11 werden die sich gegenüberliegenden und einander ergänzenden Packungsaufnahmen 46 gleichzeitig auf- und abbewegt, so daß die von zwei Packungsaufnahmen 46 erfaßte Packungsgruppe 22 in horizontaler Ebene liegend vom Packungsförderer 11 abgehoben und aufwärts transportiert wird. Die Aufnahmekapazität des Pakkungsspeichers 42 ist von dessen Höhe bzw. der Länge der Hubförderer 43 bestimmt.

Dem Packungsspeicher 42 ist auf seiner Austrittsseite 48 ein Stoppanschlag 49 zugeordnet. Dieser aus einem zweiarmigen Hebel bestehende Stoppanschlag 49 ist mit einem Anschlagschenkel 50 versehen, der durch einen Druckmittelzylinder 51 in die Bewegungsbahn der Packungen 10 hebbar ist. In dieser Stoppstellung (Fig. 2) werden die auf dem Packungsförderer 11 nachfolgenden Packungen 10 an der Austrittsseite 48 des Packungsspeichers 42 gestaut, derart, daß eine Packungsgruppe 22 in einer für die Aufnahme durch den Packungsspeicher 42 korrekten Position angestaut wird. Der Stoppanschlag 49 wird durch die Fotozelle 28 betätigt, also nach Bildung der Staureihe 27.

Ein weiterer Stoppanschlag 52 befindet sich im Bereich der Eintrittsseite 53 des Packungsspeichers 42. Der Stoppanschlag 52 ist in gleicher Weise ausgebildet wie der Stoppanschlag 49, also mit Anschlagschenkel 54 und Druckmittelzylinder 55. Zur Steuerung der einzelnen Funktionen sind Tast- bzw. Überwachungsorgane im Bereich des Packungsspeichers 42 vorgesehen, nämlich eine Fotozelle 56 im Bereich des Packungsspeichers 42, und zwar benachbart zur Austrittsseite 48. Eine weitere Fotozelle 57 befindet sich außerhalb des Bereichs der Hubförderer 43 des Packungsspeichers 42, benachbart zur Eintrittsseite 53.

Im Falle einer in Fig. 2 wiedergegebenen Störung im Bereich der Sammel- und Verpackungsstation 21 wird, wie beschrieben, der Stoppanschlag 49 in Stopp-Position bewegt. Die Fotozelle 56 steuert dabei die Bewegung des Stoppanschlags 49 derart, daß der Anschlagschenkel 50 in eine zwischen aufeinanderfolgenden Packungen 10 gebildete Lücke eintritt. Die durch den Packungsheber 29 anzuhebende Staureihe 27 umfaßt alle Packungen 10, die durch den Packungsspeicher 42 hindurchgefördert sind und auch den Anschlagschenkel 50 des Stoppanschlags 49 bereits passiert haben.

Durch die Nachförderung der Packungen 10 wird auch ein weiteres, horizontal unmittelbar oberhalb des Packungsförderers 11 wirkendes Überwachungsorgan, nämlich eine Fotozelle 58, durch dauerhafte Überdeckung aktiviert. Dadurch wird der Packungsspeicher 42 in Tätigkeit gesetzt, nämlich um einen Schalttakt unter Mitnahme einer Packungsgruppe 22 aufwärts bewegt. Die Aufnahme der weiteren Pakkungsgruppen 22 in den Packungsspeicher 42 geht in gleicher Weise vonstatten.

Wenn die Sammel- und Verpackungsstation 21 wieder aufnahmebereit ist, wird der Packungsheber 29 wieder abgesenkt. Nach einer gewissen Zeit wird durch Abfördern der Packungen 10 die Fotozelle 28 freigegeben. Dies hat zur Folge, daß der Stoppanschlag 49 nach unten in die Ausgangsstellung zurückbewegt wird. Die nachfolgenden Packungen 10 werden nun nicht mehr in den Speicher 42 gefördert, sondern der Sammel- und Verpackungsstation 21 unmittelbar zugeführt.

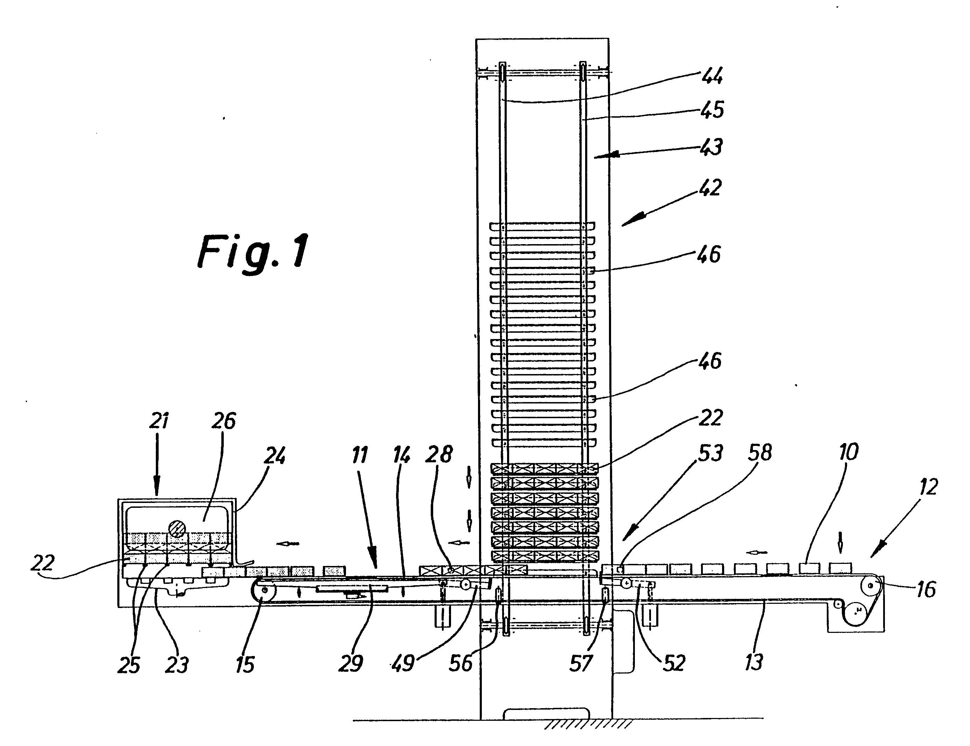

Die in dem Packungsspeicher 42 aufgenommenen Packungsgruppen 22 werden nun in den Packungsfluß zurückgeführt, und zwar durch taktweises Einschleusen der Packungsgruppen 22 in die fortlaufend geförderten Packungen 10 auf dem Packungsförderer 11. Dabei sind unterschiedliche Förderungsalternativen möglich. In Fig. 1 ist der Rückführungsablauf gezeigt, wenn die Zuführung von Packungen 10 durch die Beschickungsstation 12 in vermindertem Umfange erfolgt. In diesem Falle können mehrere, beispielsweise zwei Packungsgruppen 22 aufeinanderfolgend dem Packungsspeicher 42 entnommen und in Dichtlage aufeinanderfolgend auf dem Packungsförderer 11 abgesetzt werden. Die von der Beschickungsstation 12 kommenden Packungen 10 werden währenddessen durch den Stoppanschlag 54 bis zur Bildung einer geschlossenen Reihe angestaut.

Wenn Packungen 10 durch die Beschickungsstation 12 in größerer Menge zugeführt werden, erfolgt die Rückführung der Packungsgruppen 22 aus dem Packungsspeicher 43 in größeren Zeitabständen. Zu diesem Zweck werden auch kurzzeitig die Packungen 10 auf dem Packungsförderer 11 durch den Stoppanschlag 52 vor dem Packungsspeicher 42 angestaut, so daß eine Packungsgruppe 22 auf dem Fördertrum 14 abgesetzt werden kann. Unmittelbar danach wird jedoch der Stoppanschlag 52 außer Position bewegt, so daß die nachfolgenden Packungen 10 in Dichtlage an die abgesetzte Packungsgruppe 22 anschließen können.

Der Packungsförderer 11 wird vorzugsweise fortlaufend mit konstanter Geschwindigkeit angetrieben. Bei Bewältigung einer größeren Anzahl von Packungen — wie bei der vorstehend beschriebenen Alternative — kann die Sammel- und Verpackungsstation 21 zeitweilig mit größerer Geschwindigkeit arbeiten, also eine größere Anzahl von Packungen 10 je Zeiteinheit aufnehmen, so daß die Rückführung der Packungen aus dem Packungsspeicher 42 ohne zusätzlichen Staueffekt vonstatten gehen kann. Der Stoppanschlag 52 wird durch die Fotozelle 58 in Verbindung mit der Fotozelle 57 gesteuert, derart, daß der Anschlagschenkel 54 jeweils in den Bereich einer Lücke zwischen aufeinanderfolgenden Pakkungen 10 eingeführt werden kann.

**Patentansprüche**

1. Verfahren zum Zuführen von Gegenständen, insbesondere Packungen zu einer Verarbeitungsstation, zum Beispiel einer Sammel- und Verpackungsstation (21), durch Förderung der Gegenstände in dichter Reihe (Packungsreihe) auf einem Packungsförderer (11), wobei bei einem Förderstau die jeweils nachfolgend geförderten Reihen von Gegenständen von dem Förderer in einen Packungsspeicher (42) aufgenommen und nach Beendigung des Förderstaus wieder auf den Packungsförderer (11) gegeben werden, dadurch gekennzeichnet, daß bei einem Förderstau die mit einer kritischen Länge vor der Verarbeitungsstation (21) aufgestaute Dichtreihe von Gegenständen (Staureihe 27) zeitweilig vom Fördertrum (14) des Packungsförderers (11) abgehoben wird und die wegen der aufrechterhaltenden Packungsförderung der Staureihe (27) nachfolgenden Packungen (10) gruppenweise, d. h. unter taktweiser Mitnahme jeweils einer Packungsgruppe (22) in den Packungsspeicher (42) so lange eingefördert werden, wie der Förderstau anhält, und daß nach Beendigung des Förderstaus zunächst die Dichtreihe (Staureihe 27) wieder auf das Fördertrum (14) abgesenkt wird und erst danach die im Packungsspeicher (42) gesammelten Packungen (10) in den Förderstrom der Packungen (10) zurückgeführt werden.

2. Verfahren nach Anspruch 1, dadurch gekennzeichnet, daß die Packungen (10) bzw. Packungsgruppen (22) aus dem Packungsspeicher (42) in Abständen in den Förderstrom zurückgeführt werden.

3. Verfahren nach Anspruch 1 oder 2, dadurch gekennzeichnet, daß zur Einführung der Packungen (10) bzw. Packungsgruppen (22) in den Packungsspeicher (42) die Packungen (10) an einer Austrittsseite (48) des Packungsspeichers (42) aufgestaut und nach Bildung einer Packungsgruppe (22) durch den Packungsspeicher (42) aufgenommen werden.

4. Verfahren nach einem der Ansprüche 1-3, dadurch gekennzeichnet, daß bei Rückführung einer Packungsgruppe (22) aus dem Speicher (42) in den Förderfluß die Packungen (10) vor dem Packungsspeicher (42), im Bereich einer Eintrittsseite (53) desselben, zeitweilig gestaut werden.

5. Vorrichtung zur Durchführung des Verfahrens nach einem oder mehreren der Ansprüche 1-4 zum Zuführen von Gegenständen, insbesondere Packungen, zu einer Verarbeitungsstation, zum Beispiel einer Sammel- und Verpackungsstation, über einen Packungsförderer (11), dem ein Packungsspeicher (42) mit mehreren auf- und abbewegbaren Packungsaufnahmen (46) zum Aufnehmen und Abgeben jeweils einer Reihe von Gegenständen von dem Packungsförderer zugeordnet ist, wozu dem Packungsförderer (11) auf der Austrittsseite (48) des Packungsspeichers (42) ein Stoppanschlag (49) und an der Eintrittsseite (53) ein weiterer Stoppanschlag (52) sowie Lücken zwischen den Gegenständen bzw. den Belegzustand erfassende Überwachungseinrichtungen zum Stauen der Gegenstände auf dem Fördertrum (14) des Packungsförderers (11) zugeordnet sind, dadurch gekennzeichnet, daß die bei einem Förderstau im Bereich der Verarbeitungsstation (21) auftretenden Staureihen (27) aus einzelnen Packungen (10) während des Förderstaus durch einen Packungsheber (29) von dem weiterfördernden Packungsförderer (11) abhebbar sind, und daß der Packungsspeicher (42) zur gruppenweisen Aufnahme sowie Abgabe der bei weiterer Förderung der Packungen (10) der Staureihe (27) nachgestauten Packungsgruppen (22) dient.

6. Vorrichtung nach Anspruch 5, dadurch gekennzeichnet, daß der Packungsheber (29) aus einem Tragteil (30) mit im wesentlichen U-förmigen Querschnitt besteht, wobei die nach oben gerichteten Schenkel (35, 36) in angehobener Position den Fördergurt (13) des Packungsförderers (11) unter Abheben der Packungen (10) seitlich umfassen.

7. Vorrichtung nach Anspruch 5 oder 6, dadurch gekennzeichnet, daß der Packungsheber (29) bzw. dessen Tragteil (30) durch einen Druckmittelzylinder (39) auf- und abbewegbar ist, dessen Stößel (40) gegen Rückholorgane, insbesondere gegen Druckfedern (41), den Packungsheber (29) aufwärts bewegen.

8. Vorrichtung nach Anspruch 6 oder 7, dadurch gekennzeichnet, daß lediglich ein mittlerer Tragteil (30) des Packungshebers (29) U-förmig ausgebildet und im Bereich der Schenkel (35, 36) mit beidseits auskragenden Tragarmen (37, 38) versehen ist.

9. Vorrichtung nach einem oder mehreren der Ansprüche 6-8, dadurch gekennzeichnet, daß ein Steg (33) des Packungshebers (29) bzw. des Tragteils (30) in Schlitzen (31, 32) seitlicher Tragwangen (18, 19) eines Trägers (17) für den Packungsförderer (11) gelagert ist.

10. Vorrichtung nach einem oder mehreren der Ansprüche 5-9, dadurch gekennzeichnet, daß der im Bereich der Eintrittsseite (53) des Packungsspeichers (42) angeordnete Stoppanschlag (52) zur Rückführung von Packungen (10) bzw. Packungsgruppen (22) zum Packungsförderer (11) in Stopp-Position bewegbar ist, derart, daß nachfolgende Packungen (10) auf dem Packungsförderer (11) vor dem Packungsspeicher (42) angehalten werden.

**Claims**

1. Process for feeding articles, especially packs, to a processing station, for example collecting and packing station (21), by conveying the articles in a closely arranged series (pack series) on a pack conveyor (11), in the event of a feed build-up the particular series of articles conveyed subsequently being received from the conveyor in a pack store (42) and, after the end of the feed build-up, being transferred to the pack conveyor (11) again, characterized in that, in the event of a feed build-up, the closely arranged series of articles (build-up series 27) built up to a critical length in front of the processing station (21) is temporarily lifted off from the conveying strand (14) of the pack conveyor (11), and the packs (10) following on account of the continuing pack conveyance of the build-up series (27) are conveyed into the pack store (42) in groups, that is to say with the periodic take-up of a particular pack group (22), as long as the feed build-up persists, and in that, after the end of the feed build-up, first the closely arranged series (build-up series 27) is lowered onto the conveying strand (14) again and only thereafter are the packs (10) which are collected in the pack store (42) returned into the feed flow of the packs (10).

2. Process according to Claim 1, characterized in that the packs (10) or pack groups (22) are returned from the pack store (42) into the feed flow at intervals.

3. Process according to Claim 1 or 2, characterized in that, to introduce the packs (10) or pack groups (22) into the pack store (42), the packs (10) are packed together on an outlet side (48) of the pack store (42) and, after a pack group (22) has formed, are received by the pack store (42).

4. Process according to one of Claims 1 to 3, characterized in that, when a pack group (22) is returned from the store (42) into the feed flow, the packs (10) are temporarily retained in front of the pack store (42) in the region of an inlet side (53) of the latter.

5. Apparatus for carrying out the process according to one or more of Claims 1 to 4 for feeding articles, especially packs, to a processing station, for example a collecting and packaging station, via a pack conveyor (11), to which is assigned a pack store (42) with several pack receptacles (46) moveable up and down for receiving and transferring a particular series of articles from the pack conveyor, for which purpose the pack conveyor (11) is assigned, on the outlet side (48) of the pack store (42), a stop (49) and, on the inlet side (53), a further stop (52) and monitoring devices detecting gaps between the articles or the state of occupation, for the build-up of the articles on the conveying strand (14) of the pack conveyor (11), characterized in that the build-up series (27) occurring in the event of a feed build-up in the region of the processing station (21) and consisting of individual packs (10) can be lifted off from the further-conveying pack conveyor (11) by a pack lifter (29) during the feed build-up, and in that the pack store (42) serves for receiving and transferring in groups the pack groups (22) built up during the further conveyance of the packs (10) of the build-up series (27).

6. Apparatus according to Claim 5, characterized in that the pack lifter (29) consists of a supporting part (30) of essentially U-shaped cross-section, and, in the lifted position, the legs (35, 36) directed upwards surround the conveyor belt (13) of the pack conveyor (11) laterally, at the same time lifting the packs (10).

7. Apparatus according to Claim 5 or 6, characterized in that the pack lifter (29) or its supporting part (30) can be moved up and down by means of a pressure-medium cylinder (39), the ram (40) of which moves the pack lifter (29) upwards counter to restoring members, especially counter to compression springs (41).

8. Apparatus according to Claim 6 or 7, characterized in that only a middle supporting part (30) of the pack lifter (29) is made U-shaped and, in the region of the legs (35, 36), is provided with supporting arms (37, 38) overhanging on both sides.

9. Apparatus according to one or more of Claims 6 to 8, characterized in that a web (33) of the pack lifter (29) or of the supporting part (30) is mounted in slots (31, 32) in lateral supporting cheeks (18, 19) of a support (17) for the pack conveyor (11).

10. Apparatus according to one or more of Claims 5 to 9, characterized in that the stop (52) arranged in the region of the inlet side (53) of the pack store (42) for the return of packs (10) or pack groups (22) to the pack conveyor (11), can be moved into the stopping position in such a way that following packs (10) are halted on the pack conveyor (11) in front of the pack store (42).

**Revendications**

1. Dispositif pour amener des objets, en particulier des paquets, à un poste de façonnage, par exemple à un poste de collecte et d'emballage (21), par transport des objets en suite serrée (suite de paquets) sur un transporteur de paquets (11), les suites de paquets transportées les unes à la suite des autres étant prélevées du transporteur par retenue du transport, pour être mises dans un accumulateur de paquets (42) et, à la fin de la retenue de transport, étant ramenées sur le transporteur de paquets, caractérisé par le fait que, lors d'une retenue de transport, la suite serrée d'objets (suite de retenue 27) retenue sur une longueur critique avant le poste de façonnage (21) est soulevée temporairement du brin d'entraînement (14) du transporteur de paquets (11) et les paquets (10) suivant la suite de retenue (27), du fait de la poursuite du transport des paquets, sont, par groupes, c'est-à-dire par prélèvement cadencé chaque fois d'un groupe de paquets (22), introduits dans l'accumulateur de paquets (42) tant que persiste la retenue de transport, et que après la fin de la retenue de transport la suite serrée (suite de retenue 27) d'abord est réabaissée sur le brin d'entraînement (14) et seulement ensuite les paquets (10) rassemblés dans l'accumulateur de paquets (42) sont ramenés dans le courant de transport des paquets (10).

2. Procédé selon la revendication 1, caractérisé par le fait que les paquets (10) ou les groupes de paquets (22) sont ramenés de l'accumulateur de paquets (42), à distance les uns des autres, dans le courant de transport.

3. Procédé selon la revendication 1 ou 2, caractérisé par le fait que, pour l'introduction des paquets (10) ou groupes de paquets (22) dans l'accumulateur de paquets (42), les paquets (10) sont refoulés sur une face de sortie (48) de l'accumulateur de paquets (42) et, après formation d'un groupe de paquets (22), sont absorbés dans l'accumulateur de paquets (42).

4. Procédé selon l'une des revendications 1 à 3, caractérisé par le fait que, lors du retour d'un groupe de paquets (22) de l'accumulateur (42) dans le flux de transport, les paquets (10) sont temporairement retenus devant l'accumulateur de paquets (42) au voisinage d'une face d'entrée (53) de celui-ci.

5. Dispositif pour la mise en œuvre du procédé selon l'une des revendications 1 à 4 pour amener des objets, en particulier des paquets, à un poste de façonnage, par exemple un poste de collecte et d'emballage, par l'intermédiaire d'un transporteur de paquets (11) auquel est associé un accumulateur de paquets (42) muni d'une pluralité de récepteurs de paquets (46) pour recevoir et libérer chaque fois une suite d'objets du transporteur de paquets, ce pourquoi sont associés au transporteur de paquets (11), à la face de sortie (48) de l'accumulateur de paquets (42), une butée d'arrêt (49) et, à la face d'entrée (53), une autre butée d'arrêt (52) ainsi que des lacunes entre les objets ou les moyens de contrôle détectant la situation des pièces, pour retenir les objets sur le brin d'entraînement (14) du transporteur de paquets (11), caractérisé par le fait que les suites de retenue (27) de différents paquets (10), se formant lors de la retenue de transport, dans la zone du poste de façonnage (21), sont, pendant la retenue de transport, soulevées, par un élévateur de paquets (29), du transporteur de paquets (11) continuant à assurer le transport, et que l'accumulateur de paquets (42) sert à recueillir et libérer par groupes les groupes de paquets (22) retenus après la suite de retenue (27) lors de la poursuite de transport des paquets (10).

6. Dispositif selon la revendication 5, caractérisé par le fait que l'élévateur de paquets (29) est constitué par une partie porteuse (30) à section sensiblement en U, les ailes (35, 36) dirigées vers le haut, enserrant latéralement, en position haute, la bande d'entraînement (13) du transporteur de paquets (11), en soulevant les paquets (10).

7. Dispositif selon la revendication 5 ou 6, caractérisé par le fait que l'élévateur de paquets (29) ou sa partie porteuse (30) est levable et abaissable par un vérin pneumatique (39) dont la tige (40) déplace vers le haut, à l'encontre d'organes de rappel, en particulier de ressorts de pression (41) l'élévateur de paquets (29).

8. Dispositif selon la revendication 6 ou 7, caractérisé par le fait que c'est seulement la partie porteuse centrale (30) de l'élévateur de paquets (29) qui est de forme en U et est pourvue au voisinage des ailes (35, 36) de bras porteurs (37, 38) en saillie de chaque côté.

9. Dispositif selon l'une des revendications 6 à 8, caractérisé par le fait qu'une entretoise (33) de l'élévateur de paquets (29) ou de la partie porteuse (30) est logée dans des fentes (31, 32) de faces porteuses (18, 19) latérales d'un support (17) pour le transporteur de paquets (11).

10. Dispositif selon l'une des revendications 5 à 9, caractérisé par le fait que la butée d'arrêt (52) disposée dans le voisinage de la face d'entrée (53) de l'accumulateur de paquets (42), pour ramener les paquets (10) ou les groupes de paquets (22) au transporteur de paquets (11), est actionnable de manière que les paquets (10) qui se suivent sur le transporteur de paquets (11) soient arrêtés avant l'accumulateur de paquets (42).

Fig. 1

Fig. 2

*Fig. 3*

Fig. 4

Fig. 5

Fig.6